# EUROPÄISCHE PATENTSCHRIFT

(11) **EP 2 987 543 B1**
(45) Veröffentlichungstag und Bekanntmachung des Hinweises auf die Patenterteilung: **13.11.2019**
(21) Anmeldenummer: 15001575.8
(22) Anmeldetag: 23.05.2015
(51) Int. Cl.: B01D 35/12, B01D 35/157, F02M 37/00, F01M 1/10

(54) **VERFAHREN UND VORRICHTUNG ZUM WECHSELN EINES FILTERS, INSBESONDERE EINES ÖLFILTERS FÜR EINE BRENNKRAFTMASCHINE**
METHOD AND DEVICE FOR CHANGING A FILTER, IN PARTICULAR OF AN OIL FILTER FOR A COMBUSTION ENGINE
PROCEDE ET DISPOSITIF DE CHANGEMENT D'UN FILTRE, EN PARTICULIER D'UN FILTRE A HUILE POUR UN MOTEUR A COMBUSTION INTERNE

(30) Priorität: 21.08.2014 DE 102014012473
(43) Veröffentlichungstag der Anmeldung: 24.02.2016
(73) Patentinhaber: MAN Truck & Bus SE, 80995 München (DE)
(72) Erfinder: Schlee, Dimitri, 96052 Bamberg (DE)
(74) Vertreter: Liebl, Thomas

(56) Entgegenhaltungen:
- EP-A1- 1 098 119
- EP-A2- 0 314 024
- EP-A2- 1 063 414
- WO-A1-00/18488
- DE-A1- 19 637 299

## Beschreibung

Die Erfindung betrifft ein Verfahren zum Wechseln eines Filters, insbesondere eines Ölfilters für eine Brennkraftmaschine, nach dem Oberbegriff des Patentanspruches 1, eine Vorrichtung zum Wechseln eines Filters, insbesondere eines Ölfilters für eine Brennkraftmaschine, nach dem Oberbegriff des Patentanspruches 6 sowie ein Fahrzeug, insbesondere ein Wasserfahrzeug, zur Durchführung des Verfahrens und/oder mit der Vorrichtung nach Patentanspruch 15.

Es ist bekannt, in einem Ölkreislauf zur Schmierung und Kühlung einer Brennkraftmaschine wenigstens einen Ölfilter vorzusehen, mittels dem das Öl des Ölkreislaufs gefiltert wird. Dadurch werden beispielsweise Feststoffpartikel aus dem Öl entfernt und in den Filter eingelagert bzw. in dem Filter gespeichert. Nach einer gewissen Zeit muss der Filter dann ausgewechselt werden, wenn sich dessen Filtereigenschaften verschlechtert haben. Zum Wechseln des Filters ist es dabei üblicherweise erforderlich, den Ölstrom durch den Ölkreislauf zu unterbrechen. Um die Brennkraftmaschine nicht ohne Öl zu betreiben, wird die Brennkraftmaschine während eines Filterwechsels regelmäßig abgeschaltet.

Es sind jedoch auch Filtersysteme bekannt, bei denen der Ölstrom bei einem Filterwechsel nicht unterbrochen und somit auch die Brennkraftmaschine nicht abgeschaltet werden muss. Derartige Filtersysteme werden insbesondere bei mit Brennkraftmaschinen betriebenen Schiffen verwendet. Bei diesen Filtersystemen ist es bekannt, mehrere Filter in dem Ölkreislauf vorzusehen, von denen wahlweise wenigstens ein Filter strömungstechnisch von dem Ölkreislauf entkoppelt werden kann, während wenigstens ein weiterer Filter nicht von dem Ölkreislauf entkoppelt ist. Für einen Filterwechsel wird dann der zu wechselnde Filter von dem Ölkreislauf entkoppelt und der gesamte Ölstrom über den nicht entkoppelten Filter geleitet. Auf diese Weise wird der Ölstrom auch während eines Filterwechsels nicht unterbrochen und zudem eine durchgängige Filterung des Öls sichergestellt.

Aus der EP 2 476 870 A1 ist beispielsweise eine Ölversorgungseinrichtung für eine Brennkraftmaschine, insbesondere für ein Kurbelgehäuse einer Brennkraftmaschine, bekannt, bei der im Strömungsweg von einem Ölreservoir zu mehreren Ölfiltereinheiten eine Schalteinheit vorgesehen, die in einer ersten Schaltposition einen Drucköl-Strömungsweg von dem Ölreservoir zu einem ersten Teil der Ölfiltereinheiten freigibt, während ein Drucköl-Strömungsweg von dem Ölreservoir zu einem zweiten Teil der Ölfiltereinheiten gesperrt ist. In einer zweiten Schaltposition der Schalteinheit ist der Drucköl-Strömungsweg von dem Ölreservoir zu dem ersten Teil der Ölfiltereinheiten gesperrt, während der Drucköl-Strömungsweg von dem Ölreservoir zu dem zweiten Teil der Ölfiltereinheiten freigegeben ist. Die Schalteinheit ist hier jedoch derart ausgebildet, dass bei der Verlagerung der Schalteinheit von der ersten in die zweite Schaltposition und umgekehrt der Ölstrom unterbrochen wird.

EP 1 063 414 A2 zeigt ein Verfahren und eine Vorrichtung zum Wechseln eines Ölfilters in einer Filtereinrichtung mit zwei Filtern, bei der ein Ventil mit zwei Stellpositionen verwendet wird.

Es ist daher Aufgabe der Erfindung ein Verfahren und eine Vorrichtung zum Wechseln eines Filters, insbesondere eines Ölfilters für eine Brennkraftmaschine, bereitzustellen, mittels denen eine Unterbrechung des zu filternden Stoffstroms auf besonders einfache und zuverlässige Weise verhindert wird.

Diese Aufgabe wird gelöst mit den Merkmalen der unabhängigen Ansprüche. Bevorzugte Weiterbildungen sind Gegenstand der Unteransprüchen.

Gemäß Anspruch 1 wird ein Verfahren zum Wechseln eines Filters, insbesondere eines Ölfilters für eine Brennkraftmaschine, vorgeschlagen, mit einer wenigstens zwei Filter aufweisenden Filtereinrichtung, wobei jeder Filter von einem zu filternden Stoffstrom durchströmt werden kann, und mit einem mittels einer Stelleinrichtung in mehrere Stellpositionen verlagerbaren Stellelement, das in einer ersten Stellposition die Zuführung des Stoffstroms zu einem ersten Filter sperrt, während die Zuführung des Stoffstroms zu einem zweiten Filter freigegeben ist, und in einer zweiten Stellposition die Zuführung des Stoffstroms zu dem zweiten Filter sperrt, während die Zuführung des Stoffstroms zu dem ersten der Filter freigegeben ist. Dabei wird das Stellelement zum Wechseln des ersten Filters in die erste Stellposition verlagert und zum Wechseln des zweiten Filters in die zweite Stellposition verlagert. Erfindungsgemäß ist das Stellelement derart ausgebildet und derart mittels der Stelleinrichtung verlagerbar, dass bei der Verlagerung des Stellelements von der ersten in die zweite Stellposition und umgekehrt die Zuführung des Stoffstroms zu wenigstens einem der Filter stets freigegeben ist und somit wenigstens einer der Filter stets von dem Stoffstrom durchströmt wird.

Durch die erfindungsgemäße Verfahrensführung wird die Unterbrechung des zu filternden Stoffstroms auf besonders zuverlässige Weise verhindert, da sowohl in den für den Filterwechsel relevanten Stellpositionen als auch in den zwischen der ersten und zweiten Stellposition liegenden Stellpositionen des Stellelements stets wenigstens einer der Filter von dem Stoffstrom durchströmt wird. So wird der Stoffstrom beispielsweise bei einer aufgrund eines Filterwechsels erforderlichen Verlagerung des Stellelements von der ersten in die zweite Stellposition und umgekehrt nie unterbrochen. Zudem wird auch die Gefahr verringert, dass der Stoffstrom aufgrund einer, insbesondere manuellen, Fehlbetätigung des Stellelements unterbrochen wird. Des Weiteren stellt das erfindungsgemäße Verfahren auch eine durchgängige Filterung des zu filternden Stoffstroms zuverlässig sicher.

Die Filtereinrichtung kann hier ausdrücklich nicht nur zwei, sondern auch mehr als zwei Filter zur Filterung des Stoffstroms aufweisen. Insofern soll die Verwendung der Begrifflichkeit erster Filter und zweiter Filter hier nur das erfindungsgemäße Grundprinzip verdeutlichen, ohne eine Einschränkung auf lediglich zwei Filter insgesamt zu sein. Die Zuführung des Stoffstroms kann gegebenenfalls auch zu mehreren Filtern gleichzeitig freigegeben oder unterbrochen werden. Zudem kann das Stellelement gegebenenfalls auch mehr als zwei Stellpositionen aufweisen, in denen jeweils die Zuführung des Stoffstroms zu wenigstens einem der Filter gesperrt und zu wenigstens einem der Filter freigegeben ist. Wesentlich ist erfindungsgemäß lediglich, dass stets wenigstens ein Filter von dem Stoffstrom durchströmt und somit eine Unterbrechung des Stoffstroms verhindert wird.

In einer bevorzugten Verfahrensführung wird das verlagerbare Stellelement bei der Verlagerung von der ersten in die zweite Stellposition und umgekehrt in eine zwischen der ersten und zweiten Stellposition angeordnete dritte Stellposition verlagert, in der die Zuführung des Stoffstroms zu dem ersten und zweiten Filter freigegeben ist. In der dritten Stellposition des Stellelements wird der Stoffstrom besonders effektiv gefiltert, da hier der erste und zweite Filter von dem Stoffstrom durchströmt werden. Die dritte Stellposition ist vorzugsweise eine Betriebsstellung des Stellelements, die üblicherweise beim Betrieb der Filtereinrichtung verwendet wird. Sofern ein Filterwechsel erforderlich ist, kann das Stellelement dann aus der Betriebsstellung bzw. aus der dritten Stellposition in die erste oder zweite Stellposition verlagert werden. Besonders bevorzugt werden in der dritten Stellposition der erste und zweite Filter parallel vom Stoffstrom durchströmt, um die Effektivität der Filterung weiter zu erhöhen.

Vorzugsweise wird die Verlagerung des Stellelements mittels wenigstens eines Anschlagelements derart begrenzt, dass das Stellelement nur zwischen der ersten und zweiten Stellposition verlagert werden kann. So wird eine Unterbrechung des Stoffstroms, beispielsweise aufgrund einer Fehlbetätigung des Stellelements, zuverlässig verhindert. Weiter bevorzugt wird das Stellelement mittels der Stelleinrichtung linear verlagert. Dadurch kann auf besonders einfache Weise umgesetzt bzw. realisiert werden, dass wenigstens einer der Filter stets von dem Stoffstrom durchströmt wird. Konkret ist das Stellelement als Kolbenelement einer Zylinder-Kolben-Einheit ausgebildet.

Weiter kann die Stelleinrichtung mittels wenigstens einer, insbesondere manuell betätigbaren, Betätigungseinrichtung betätigt werden, wobei bevorzugt vorgesehen ist, das bei einer Betätigung der Betätigungseinrichtung zum Wechseln eines der Filter zunächst die Zuführung des Stoffstroms zu dem Filter gesperrt und anschließend eine Ablass-Einrichtung aktiviert wird, mittels der der Reststoff in dem Filter aus dem Filter abgelassen wird. So kann der Filterwechsel auf besonders einfache und komfortable Weise durchgeführt werden.

Besonders bevorzugt ist der erste Filter in einem ersten Filterbehälter und der zweite Filter in einem zweiten Filterbehälter angeordnet, wobei jeder der Filterbehälter einen Deckel aufweist, mittels dem die Filterbehälter zum Wechseln der Filter verschlossen und geöffnet werden können. Jeder Deckel kann dabei mittels einer, insbesondere manuell betätigbaren, Fixiereinrichtung lösbar an dem jeweiligen Filterbehälter festgelegt werden, wobei die Fixiereinrichtungen der Filterbehälter derart mit der wenigstens einen Betätigungseinrichtung gekoppelt sind, das bei einem Lösen des Deckels des ersten Filterbehälters die Betätigungseinrichtung zum Wechseln des ersten Filters betätigt wird, und dass bei einem Lösen des Deckels des zweiten Filterbehälters die Betätigungseinrichtung zum Wechseln des zweiten Filters betätigt wird. Auf diese Weise wird ein besonders komfortabler Filterwechsel möglich, da die Betätigungseinrichtung bei einem Lösen des Deckels stets mitbetätigt wird. So muss zum Wechseln eines Filters lediglich der Deckel des zugehörigen Filterbehälters gelöst werden. Da der Deckel zudem erst dann abgenommen werden kann, wenn die Betätigungseinrichtung betätigt wurde, wird auch ein fehlerfreier Filterwechsel sichergestellt. Alternativ können die Fixiereinrichtungen natürlich auch nicht mit der wenigstens einen Betätigungseinrichtung gekoppelt sein, um den Aufbau zu vereinfachen.

Zur Lösung der bereits erwähnten Aufgabe wird ferner eine Vorrichtung zum Wechseln eines Filters, insbesondere eines Ölfilters für eine Brennkraftmaschine, beansprucht, mit einer wenigstens zwei Filter aufweisenden Filtereinrichtung, wobei jeder Filter von einem zu filternden Stoffstrom durchströmt werden kann, und mit einem mittels einer Stelleinrichtung in mehrere Stellpositionen verlagerbaren Stellelement, das in einer ersten Stellposition die Zuführung des Stoffstroms zu einem ersten Filter sperrt, während die Zuführung des Stoffstroms zu einem zweiten Filter freigegeben ist, und in einer zweiten Stellposition die Zuführung des Stoffstroms zu dem zweiten der beiden Filter sperrt, während die Zuführung des Stoffstroms zu dem ersten der beiden Filter freigegeben ist. Erfindungsgemäß ist das Stellelement derart ausgebildet und derart mittels der Stelleinrichtung verlagerbar, dass bei der Verlagerung des Stellelements von der ersten in die zweite Stellposition und umgekehrt die Zuführung des Stoffstroms zu wenigstens einem der Filter stets freigegeben ist.

Die sich durch die erfindungsgemäße Vorrichtung und einen Teil der darauf rückbezogenen Unteransprüche ergebenden Vorteile sind identisch mit den bereits zuvor gewürdigten Vorteilen des vergleichbare Gegenstände betreffenden erfindungsgemäßen Verfahrens, so dass diese hier nicht mehr wiederholt werden.

In einer bevorzugten Ausgestaltung der erfindungsgemäßen Vorrichtung sind zwei Zylinder-Kolben-Einheiten vorgesehen, deren Kolbenelemente das Stellelement ausbilden und derart miteinander gekoppelt sind, das sie stets eine im Wesentlichen identische und/oder synchrone Hubbewegung ausführen, wobei eine erste der beiden Zylinder-Kolben-Einheiten, in Stoff-Strömungsrichtung gesehen, stromauf der parallel vom Stoffstrom durchströmbaren Filter angeordnet ist, und wobei eine zweite der beiden Zylinder-Kolben-Einheiten, in Stoff-Strömungsrichtung gesehen, stromab der parallel vom Stoffstrom durchströmbaren Filter angeordnet ist. Durch diesen Aufbau kann auf besonders einfache Weise sichergestellt werden, dass bei der Verlagerung des als Kolbenelemente ausgebildeten Stellelements von der ersten in die zweite Stellposition und umgekehrt die Zuführung des Stoffstroms zu wenigstens einem der beiden Filter stets freigegeben ist. Die Kopplung der beiden Kolbenelemente derart, dass sie stets eine identische Hubbewegung ausführen, kann dabei beispielsweise dadurch realisiert werden, dass die Kolbenelemente mittels wenigstens eines Verbindungselements, beispielsweise einer Stange, starr miteinander verbunden sind. Bevorzugt ist es jedoch, wenn die Kolbenelemente hydraulisch oder pneumatisch miteinander gekoppelt sind. Grundsätzlich kann natürlich auch jede andere zweckmäßige Kopplung der beiden Kolbenelemente verwendet werden, mittels der stets eine im Wesentlichen identische Hubbewegung der Kolbenelemente sichergestellt wird.

Konkret kann der Zylinder der ersten Zylinder-Kolben-Einheit eine umfangsseitig angeordnete Eintritts-Ausnehmung und zwei umfangsseitig angeordnete Ausstritts-Ausnehmungen aufweisen, wobei die beiden Austritts-Ausnehmungen in Zylinder-Axialrichtung voneinander beabstandet sind, und wobei der zu filternde Stoffstrom über die Eintritts-Ausnehmung in einen Hohlraum des Zylinders eintritt und über die beiden Austritts-Ausnehmungen aus dem Hohlraum austritt. Der Hohlraum des Zylinders ist dabei über eine erste der beiden Austritts-Ausnehmungen strömungstechnisch mit dem ersten Filter verbunden und über eine zweite der beiden Austritts-Ausnehmungen strömungstechnisch mit dem zweiten Filter verbunden. Die beiden Austritts-Ausnehmungen können dann mittels eines Kolbenelements der ersten Zylinder-Kolben-Einheit strömungstechnisch verschlossen und geöffnet werden. So kann die Zuführung des Stoffstroms zu den beiden parallel vom Stoffstrom durchströmbaren Filtern auf einfache und zuverlässige Weise gesteuert werden.

Weiter kann ein Zylinder der zweiten Zylinder-Kolben-Einheit zwei umfangsseitig angeordnete Eintritts-Ausnehmungen und eine umfangsseitig angeordnete Austritts-Ausnehmung aufweisen, wobei die beiden Eintritts-Ausnehmungen in Zylinder-Axialrichtung voneinander beabstandet sind, und wobei der zu filternde Stoffstrom über die beiden Eintritts-Ausnehmungen in einen Hohlraum des Zylinders eintritt und über die Austritts-Ausnehmung aus dem Hohlraum austritt. Die beiden Eintritts-Ausnehmungen sind dabei derart angeordnet, dass der Hohlraum des Zylinders zumindest in der ersten Stellposition des Kolbenelements der zweiten Zylinder-Kolben-Einheit über eine erste der beiden Eintritts-Ausnehmungen strömungstechnisch mit dem ersten Filter verbunden ist, und dass der Hohlraum des zweiten Zylinders zumindest in der zweiten Stellposition des Kolbenelements über eine zweite der beiden Eintritts-Ausnehmungen strömungstechnisch mit dem zweiten Filter verbunden ist. So kann der Stoffstrom auf einfache Weise wieder aus den beiden parallel vom Stoffstrom durchströmbaren Filtern ausgeleitet werden.

Bevorzugt weist wenigstens ein Kolbenelement zwei in Zylinder-Axialrichtung voneinander beabstandete Kolben auf, die mittels eines Verbindungselementes, insbesondere einer Stange, starr miteinander verbunden sind. Mittels der beiden Kolbenelemente kann der Stoffstrom durch die beiden parallel vom Stoffstrom durchströmbaren Filter einfach und funktionssicher gesteuert werden. Weiter ist das Kolbenelement hydraulisch oder pneumatisch, mittels des zu filternden Stoffs, antreibbar und bevorzugt die Stelleinrichtung als Ventileinrichtung ausgebildet. Durch den hydraulischen oder pneumatischen Antrieb des Kolbenelements kann die Verlagerung des Kolbenelements besonders präzise und zuverlässig gesteuert werden. Die Verwendung des zu filternden Stoffs als Antriebsmittels ist vorteilhaft, da kein zusätzlicher Speicherbehälter für ein hydraulisches oder pneumatisches Medium vorgesehen werden muss.

Ferner wird ein Fahrzeug, insbesondere ein Wasserfahrzeug, mit der erfindungsgemäßen Vorrichtung beansprucht. Die sich daraus ergebenden Vorteile sind identisch mit den bereits gewürdigten Vorteilen der erfindungsgemäßen Vorrichtung, so dass diese hier nicht wiederholt werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung eine Filtereinrichtung für eine Brennkraftmaschine in einer ersten Betriebsweise;
- Fig. 2: in einer Darstellung gemäß Fig. 1 die Filtereinrichtung mit daran festgelegten Filtern;
- Fig. 3: in einer Darstellung gemäß Fig. 1 die Filtereinrichtung in einer zweiten Betriebsweise;
- Fig. 4: in einer Darstellung gemäß Fig. 3 die Filtereinrichtung mit daran festgelegten Filtern;
- Fig. 5: eine schematische Darstellung, anhand der die Steuerung eines Stellelements der Filtereinrichtung erläutert wird;
- Fig. 6: eine weitere schematische Darstellung, anhand der die Steuerung des Stellelements erläutert wird;
- Fig. 7: eine weitere schematische Darstellung, anhand der die Steuerung des Stellelements erläutert wird; und
- Fig. 8: in einer Schnittdarstellung einen Filterbehälter der Filtereinrichtung.

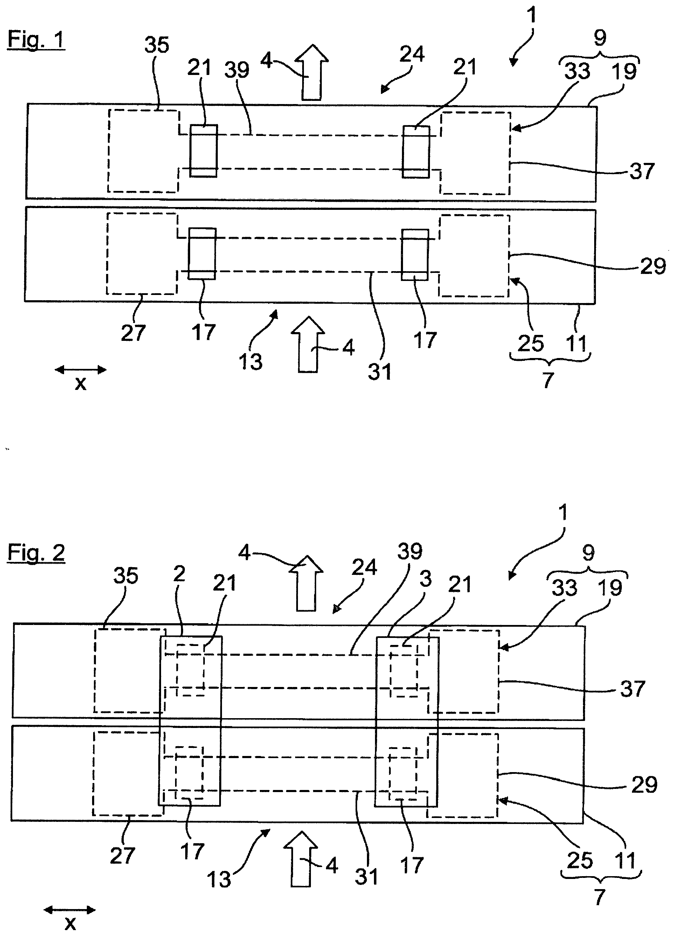

In den Fig. 1 und 2 ist eine Filtereinrichtung 1 für eine Brennkraftmaschine in einer ersten Betriebsweise schematisch gezeigt. Die Filtereinrichtung 1 ist Bestandteil eines Ölkreislaufs, mittels dem die Brennkraftmaschine geschmiert und gekühlt wird. In Fig. 1 ist dabei kein Filter an der Filtereinrichtung 1 festgelegt, während in Fig. 2 mehrere, hier beispielhaft zwei, schematisch angedeutete Filter 2, 3, an der Filtereinrichtung 1 festgelegt sind. Mittels der Filter 2, 3 werden beispielsweise Partikel aus einem Ölstrom 4 des Ölkreislaufs gefiltert.

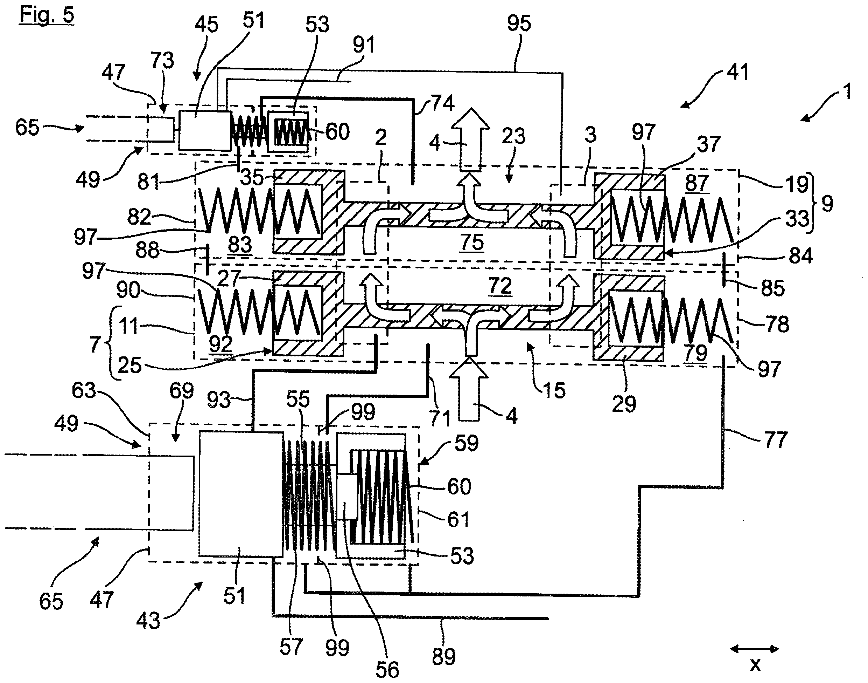

Die Filter-Einrichtung 1 umfasst hier beispielhaft eine erste Zylinder-Kolben-Einheit 7 und eine zweite Zylinder-Kolben-Einheit 9. Ein Zylinder 11 der Zylinder-Kolben-Einheit 7 weist dabei eine umfangsseitig angeordnete Eintritts-Ausnehmung 13 auf, über die der zu filternde Ölstrom 4 in einen Hohlraum 15 (Fig. 5) des Zylinders 11 eintritt. Zudem weist der Zylinder 11 hier auch zwei umfangsseitig angeordnete, in Zylinder-Axialrichtung x voneinander beabstandete Austritts-Ausnehmungen 17 auf, über die der Ölstrom 4 aus dem Hohlraum 15 des Zylinders 11 austreten kann. Im Bereich jeder Austritts-Ausnehmung 17 ist dabei jeweils ein Filter 2, 3 derart an dem Zylinder 11 festgelegt, dass der Ölstrom 4 aus dem Hohlraum 15 des Zylinders 11 in die Filter 2, 3 einströmen kann. Weiter weist ein Zylinder 19 der zweiten Zylinder-Kolben-Einheit 9 zwei umfangsseitig angeordnete, in Zylinder-Axialrichtung x voneinander beabstandete Eintritts-Ausnehmungen 21 auf. Jeder der Filter 2, 3 ist im Bereich dieser Eintritts-Ausnehmungen 21 derart an dem Zylinder 19 festgelegt, dass der Ölstrom 4 aus den Filtern 3 über die Eintritts-Ausnehmungen 21 in einen Hohlraum 23 (Fig. 5) des Zylinders 19 einströmen kann. Über eine ebenfalls umfangsseitig angeordnete Austritts-Ausnehmung 24 des Zylinders 19 kann der Ölstrom 4 dann wieder aus dem Hohlraum 23 des Zylinders 19 ausströmen. Die erste Zylinder-Kolben-Einheit 7 ist hier somit, in Öl-Strömungsrichtung gesehen, stromauf der beiden Filter 2, 3 der Filter-Einrichtung 1 angeordnet. Die zweite Zylinder-Kolben-Einheit 9 ist, in ÖI-Strömungsrichtung gesehen, stromab der beiden Filter 2, 3 angeordnet. Durch diese Anordnung können die beiden Filter 2, 3 der Filtereinrichtung 1 parallel von dem Ölstrom 4 durchströmt werden.

Des Weiteren weist ein Kolbenelement 25 der ersten Zylinder-Kolben-Einheit 7 hier beispielhaft zwei in Zylinder-Axialrichtung x voneinander beabstandete Kolben 27, 29 auf, die mittels eines Verbindungselements, hier beispielhaft eine Stange 31, miteinander verbunden sind. Zudem weist ein Kolbenelement 33 der zweiten Zylinder-Kolben-Einheit 9 hier ebenfalls zwei in Zylinder-Axialrichtung x voneinander beabstandete Kolben 35, 37 auf, die hier ebenfalls mittels einer Stange 39 starr miteinander verbunden sind. Mittels der Kolben 27, 29 des Kolbenelements 25 können dabei die Austritts-Ausnehmungen 17 des Zylinders 11 strömungstechnisch verschlossen werden. Mittels der Kolben 35, 37 des Kolbenelements 33 können die Eintritts-Ausnehmungen 21 des Zylinders 19 strömungstechnisch verschlossen werden. In der in den Fig. 1 und 2 gezeigten Betriebsweise der Filtereinrichtung 1 sind die Kolbenelemente 25, 33 jedoch derart angeordnet, dass sowohl die Austritts-Ausnehmungen 17 als auch die Eintritts-Ausnehmungen 21 nicht von den Kolbenelementen 25, 33 verschlossen sind, so dass der Ölstrom über beide Filter 2, 3 der Filtereinrichtung 1 strömen kann. Daher wird die in den Fig. 1 und 2 gezeigte Betriebsweise der Filtereinrichtung 1 auch als Zweifilterbetrieb bezeichnet. Dieser Zweifilterbetrieb wird üblicherweise beim Betrieb der Filtereinrichtung 1 verwendet.

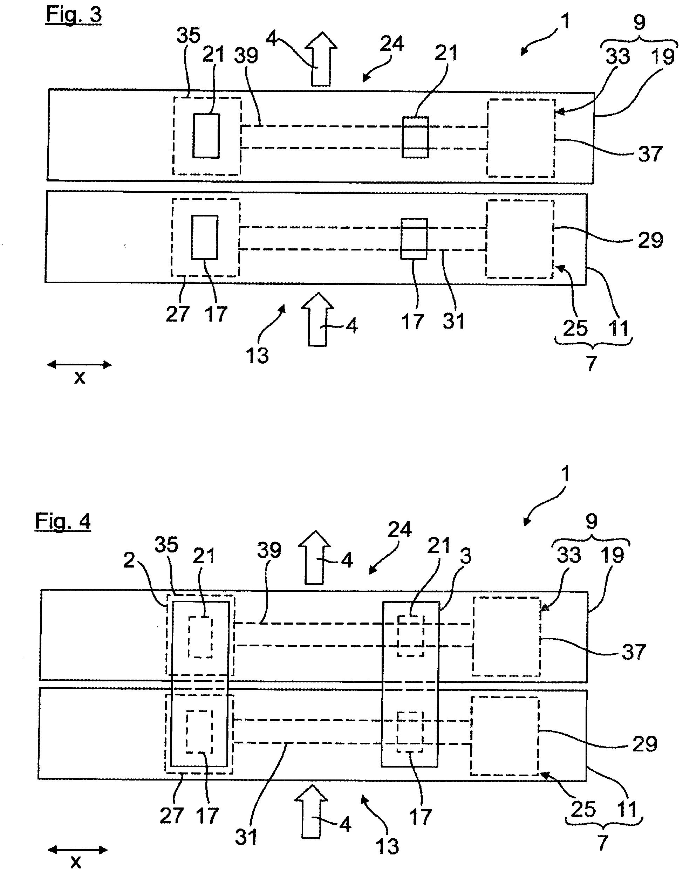

Sofern einer der beiden Filter 3 ausgewechselt werden muss, kann die Filtereinrichtung 1 auch in den sogenannten Einfilterbetrieb versetzt werden, bei der der zu wechselnde Filter 2, 3 strömungstechnisch von dem Ölstrom 4 entkoppelt ist. In den Fig. 3 und 4 ist hier beispielhaft der Filter 2 von dem Ölstrom 4 entkoppelt. Die Kolbenelemente 25, 33 sind dabei derart angeordnet, dass die Kolben 27, 35 die dem zu wechselnden Filter 2 zugeordneten Ausnehmungen 17, 21 verschließen. Auf diese Weise wird die Zuführung des Ölstroms 4 zu dem Filter 2 und die Abführung des Ölstroms 4 aus dem Filter 2 gesperrt, während die Zuführung des Ölstroms 4 zu dem Filter 3 und die Abführung des Ölstroms 4 aus dem Filter 3 freigegeben ist. Alternativ kann natürlich auch der Filter 3 von dem Ölstrom 4 entkoppelt werden, wenn dieser Filter 3 gewechselt werden muss. Die Kolbenelemente 25, 33 sind dann derart angeordnet, dass die Kolben 29, 37 die dem zu wechselnden Filter 3 zugeordneten Ausnehmungen 17, 21 verschließen. Die Verlagerung der Kolbenelemente 25, 33 wird mittels einer in Stelleinrichtung 41 (Fig. 5) der Filtereinrichtung 1 gesteuert.

Der Aufbau und die Funktionsweise der Stelleinrichtung 41 werden im Folgenden anhand der Fig. 5 bis 7 näher erläutert:

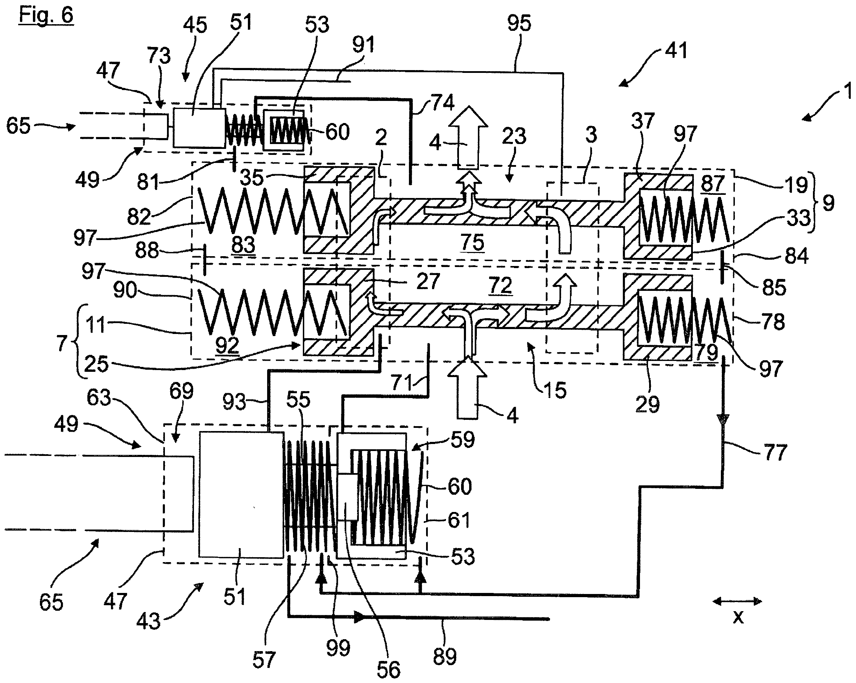

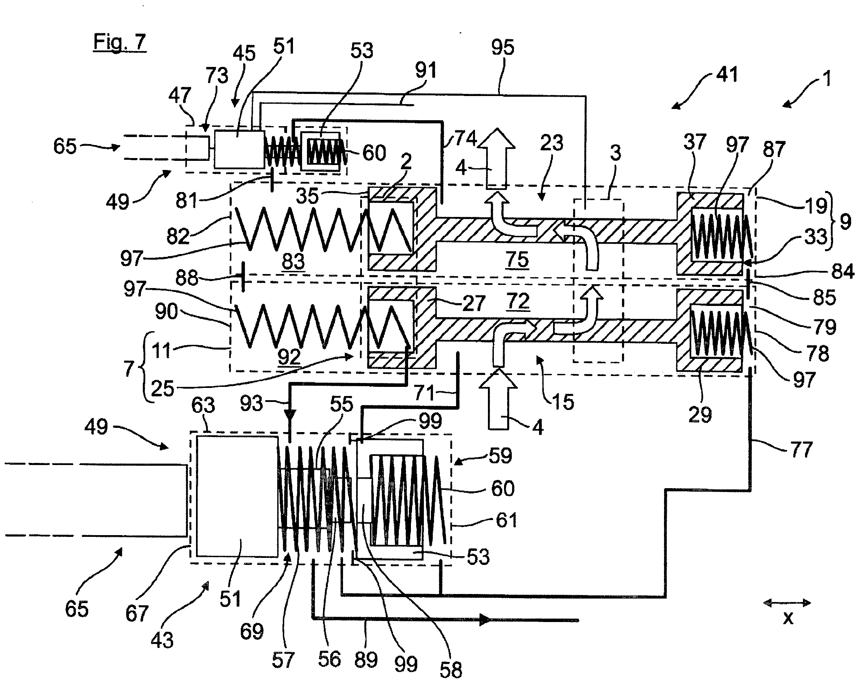

In Fig. 5 ist die Filtereinrichtung 1 in dem Zweifilterbetrieb gemäß den Fig. 1 und 2 gezeigt, während in Fig. 7 die Filtereinrichtung 1 in dem Einfilterbetrieb gemäß den Fig. 3 und 4 gezeigt ist. In Fig. 6 ist die Filtereinrichtung 1 in einer zwischen dem Zweifilterbetrieb und dem Einfilterbetrieb befindlichen Zwischenbetrieb. Gemäß Fig. 5 weist die Stelleinrichtung 41 mehrere, hier beispielhaft zwei, identisch ausgebildete Ventileinrichtungen 43, 45 auf, wobei die Ventileinrichtung 43 der Zylinder-Kolben-Einheit 7 sowie dem Filter 2 und die Ventileinrichtung 45 der Zylinder-Kolben-Einheit 9 sowie dem Filter 3 zugeordnet ist. Zur Verdeutlichung des Aufbaus der Ventileinrichtungen 43, 45 ist die Ventileinrichtung 43 hier vergrößert dargestellt. Jede der Ventileinrichtung 43, 45 weist einen in Fig. 5 mit gestrichelten Linien angedeuteten Zylinder 47 auf, in dem ein teilweise ein Kolbenelement 49 angeordnet ist. Jedes Kolbenelement 49 weist zwei in Zylinder-Axialrichtung x voneinander beabstandete Kolben 51, 53 auf, zwischen denen ein Beabstandungselement, hier beispielhaft eine Stange 55, angeordnet ist. Die Stange 55 ist hier beispielhaft materialeinheitlich und einstückig an den Kolben 51 festgelegt und bei dem in Fig. 5 gezeigten Einfilterbetrieb in Anlage mit dem Kolben 53. Dabei ist ein in Zylinder-Axialrichtung x nach hinten von der Stange 55 abragendes Zylinderelement 56 mit einem definierten Spaltabstand in einer Ausnehmung 58 (Fig. 7) des Kolbens 53 angeordnet bzw. aufgenommen. Die Kolben 51, 53 sind hier zudem gegenüber dem Zylinder 49 abdichtend ausgebildet. Diese Abdichtung kann beispielsweise mittels einer Spielpassung oder mittels wenigstens eines O-Ringes realisiert werden. Des Weiteren sind die Kolbenelemente 49 bei dem in Fig. 5 gezeigten Zweifilterbetrieb der Filtereinrichtung 1 in einer ersten Stellposition, bei der der jeweilige Kolben 53 in Anlage mit einer, in Zylinder-Axialrichtung x gesehen, hinteren Wandung 61 des jeweiligen Zylinders 47 ist.

Weiter ist, in Zylinder-Axialrichtung x gesehen, zwischen den Kolben 51, 53 auch ein Kraftspeicher, hier beispielhaft ein Federelement 57, angeordnet, das die Kolben 51, 53 bei dem in Fig. 5 gezeigten ersten Stellposition des Kolbenelemente 49 in Kolbenelement-Axialrichtung auseinanderdrückt. Zudem weist hier jeder Kolben 53 auch eine Ausnehmung 59 auf, in der ebenfalls ein Energiespeicher, hier beispielhaft ein Federelement 60, angeordnet ist. Das Federelement 60 ist in Anlage mit der hinteren Wandung 61 des Zylinders 47 und drückt das Kolbenelement 49 in Zylinder-Axialrichtung x weg von der Wandung 61 hin zu einer, in Zylinder-Axialrichtung x gesehen, vorderen Wandung 63 des Zylinders 47. Des Weiteren ist das Kolbenelement 49 bei dem in Fig. 5 gezeigten Einfilterbetrieb auch in Anlage mit einem, in Zylinder-Axialrichtung x gesehen, vor dem Kolbenelement 49 angeordneten Stabelement 65. Das Stabelement 65 ist durch eine Ausnehmung in der Wandung 63 abdichtend aus dem Zylinder 47 herausgeführt. Mittels der Stabelemente 65 werden die Ventileinrichtungen 43, 45 betätigt bzw. die Kolbenelemente 49 der Ventileinrichtungen 43, 45 in Kolbenelement-Axialrichtung relativ zu den ortsfest festgelegten Zylindern 47 verlagert. Die Betätigung der Ventileinrichtungen 43, 45 kann dabei vorzugsweise manuell erfolgen.

Des Weiteren ist ein Hohlraum 69 der Ventileinrichtung 43 mittels einer Verbindungsleitung 71 strömungstechnisch mit einem zwischen dem Kolben 27, 29 angeordneten Bereich 72 des Hohlraums 15 verbunden. Ebenso ist ein Hohlraum 73 der Ventileinrichtung 45 mittels einer Verbindungsleitung 74 strömungstechnisch mit einem zwischen den Kolben 35, 37 angeordneten Bereich 75 des Hohlraums 23 verbunden.

Weiter ist der Hohlraum 69 der Ventileinrichtung 43 mittels einer Verbindungsleitung 77 auch strömungstechnisch mit einem zwischen dem Kolben 29 und einer, in Zylinder-Axialrichtung x gesehen, hinteren Wandung 78 des Zylinders 11 angeordneten Bereich 79 des Hohlraums 15 verbunden. Ebenso ist der Hohlraum 74 der Ventileinrichtung 46 mittels einer Verbindungsleitung 81 strömungstechnisch mit einem zwischen dem Kolben 35 und einer, in Zylinder-Axialrichtung x gesehen, vorderen Wandung 82 des Zylinders 19 angeordneten Bereich 83 des Hohlraums 23 verbunden.

Wie in Fig. 5 weiter gezeigt ist, ist der Bereich 79 des Hohlraums 15 mittels einer Verbindungsleitung 85 auch strömungstechnisch mit einem zwischen dem Kolben 37 und einer, in Zylinder-Axialrichtung x gesehen, hinteren Wandung 84 des Zylinders 19 angeordneten Bereich 87 des Hohlraums 23 verbunden. Zudem ist der Bereich 83 des Hohlraums 23 mittels einer Verbindungsleitung 88 auch strömungstechnisch mit einem zwischen dem Kolben 27 und einer, in Zylinder-Axialrichtung x gesehen, vorderen Wandung 90 des Zylinders 11 angeordneten Bereich 92 des Hohlraums 15 verbunden.

Des Weiteren ist an den Zylinder 47 der Ventileinrichtung 43 auch eine Ablassleitung 89 angeschlossen, mittels der Öl aus dem Hohlraum 69 der Ventileinrichtung 43 abgelassen und einem Ölspeicher, beispielsweise einer Ölwanne, zugeführt werden kann. Ebenso ist auch an den Zylinder 47 der Ventileinrichtung 45 eine Ablassleitung 91 angeschlossen, mittels der das Öl aus dem Hohlraum 73 der Ventileinrichtung 45 abgelassen und dem Ölspeicher zugeführt werden kann. Zudem ist der Hohlraum 69 der Ventileinrichtung 43 mittels einer Ablassleitung 93 auch strömungstechnisch mit dem Filter 2 verbunden, so dass mittels der Ablassleitung 93 Öl aus dem Filter 2 abgelassen und dem Hohlraum 69 der Ventileinrichtung 43 zugeführt werden kann. Der Hohlraum 74 der Ventileinrichtung 45 ist mittels einer Ablassleitung 95 strömungstechnisch mit dem Filter 3 verbunden, so dass mittels der Ablassleitung 95 Öl aus dem Filter 3 abgelassen und dem Hohlraum 74 der Ventileinrichtung 45 zugeführt werden kann.

Bei den in Fig. 5 gezeigten ersten Stellpositionen der Kolbenelemente 49 sperren die Kolben 51 der Kolbenelemente 49 den Ölstrom durch die Ablassleitungen 89, 91, 93 und 95. Der Ölstrom durch die Verbindungsleitungen 71, 74, 77 und 81 ist jedoch freigegeben. Die Bereiche 72, 79 und 92 des Hohlraums 15 und die Bereiche 75, 83 und 87 des Hohlraums 23 weisen hier somit einen identischen Öldruck auf.

Des Weiteren sind zwischen den Kolben 27, 29, 35 und 37 und den dem jeweiligen Kolben 27, 29, 35 und 37 zugeordneten Wandungen 78, 82, 84 und 90 identisch ausgebildete Energiespeicher, hier beispielhaft Federelemente 97, angeordnet. Mittels der Federelemente werden die Kolbenelemente 25, 33 in der für den Zweifilterbetrieb erforderlichen, in Fig. 5 gezeigten Stellung gehalten, wenn die Bereiche 72, 79 und 92 des Hohlraums 15 und die Bereiche 75, 83 und 87 des Hohlraums 23 einen identischen Öldruck aufweisen. Die Federelemente 97 und die Verbindungsleitungen 85, 88 stellen sicher, dass die Kolbenelemente 25, 33 stets eine im Wesentlichen identische bzw. synchrone Hubbewegung ausführen. Aufgrund dieser identischen bzw. synchronen Bewegung der Kolbenelemente 25, 33 ist die Filtereinrichtung 1 hier derart ausgebildet ist, dass wenigstens ein Filter 2, 3 stets nicht von dem Ölstrom 4 entkoppelt ist und somit stets wenigstens ein Filter 2, 3 von dem Ölstrom 4 durchströmt werden kann.

In Fig. 6 wurde das Stabelement 65, in Kolben-Axialrichtung x gesehen, nach vorne verlagert. Dadurch wurde auch das Kolbenelement 49 mittels des Federelements 60, in Zylinder-Axialrichtung x gesehen, nach vorne verlagert, bis der Kolben 53 in Anlage mit Anschlagelementen 99 der Ventileinrichtung 43 ist. In dieser zweiten Stellposition des Kolbenelements 49 sperrt der Kolben 51 weiterhin den Ölstrom durch die Ablassleitung 93. Zudem sperrt der Kolben 53 den Ölstrom durch die Verbindungsleitung 71. Der Ölstrom durch die Verbindungsleitung 77 und durch die Ablassleitung 89 wird durch das Kolbenelement 49 der Ventileinrichtung 43 jedoch freigegeben. Befindet sich wie in Fig. 6 das Kolbenelement 49 der Ventileinrichtung 45 in der ersten Stellposition und das Kolbenelement 49 der Ventileinrichtung 43 in der zweiten Stellposition ist der Druck in den Bereichen 79, 87 geringer als in den Bereichen 83, 92 der Hohlräume 15, 23. Die Kolbenelemente 25, 33 der Zylinder-Kolben-Einheiten 7, 9 verlagern sich daher in Richtung der hinteren Wandungen 78, 84.

In Fig. 7 sind die Kolbenelemente 25, 33 der Zylinder-Kolben-Einheiten 7, 9 in Anlage mit den hinteren Wandungen 78, 84, so dass die Filtereinrichtung 1 in dem Einfilterbetrieb zum Wechseln des Filters 2 ist. Zudem wurde das Stabelement 65, in Zylinder-Axialrichtung x gesehen, noch weiter nach vorne verlagert, so dass sich das Stabelement 65 nun außerhalb des Zylinders 47 befindet. Dadurch wird der Kolben 51 mittels des Federelements 57, in Zylinder-Axialrichtung x gesehen, noch weiter nach vorne verlagert, bis der Kolben 51 in Anlage mit der vorderen Wandung 63 des Zylinders 47 der Ventileinrichtung 43 ist. In dieser dritten Stellposition des Kolbenelements 49 sperrt der Kolben 53 weiter den Ölstrom durch die Verbindungsleitung 71. Der Ölstrom durch die Verbindungsleitung 77, durch die Ablassleitung 89 und durch die Ablassleitung 93 wird durch das Kolbenelement 49 der Ventileinrichtung 43 jedoch freigegeben. Dadurch wird das sich in dem Filter 2 befindende Restöl über die Ablassleitungen 89, 93 aus dem Filter 2 abgelassen. Nach dem Ablassen des Restöls kann der Filter 2 dann gewechselt und schließlich die Filtereinrichtung 1 durch Verlagerung des Kolbenelements 49 in die erste Stellposition gemäß Fig. 5 wieder in den Zweifilterbetrieb versetzt werden. Das Wechseln des Filters 3 erfolgt analog zu dem Wechsel des Filters 2 durch Betätigung der Ventileinrichtung 45.

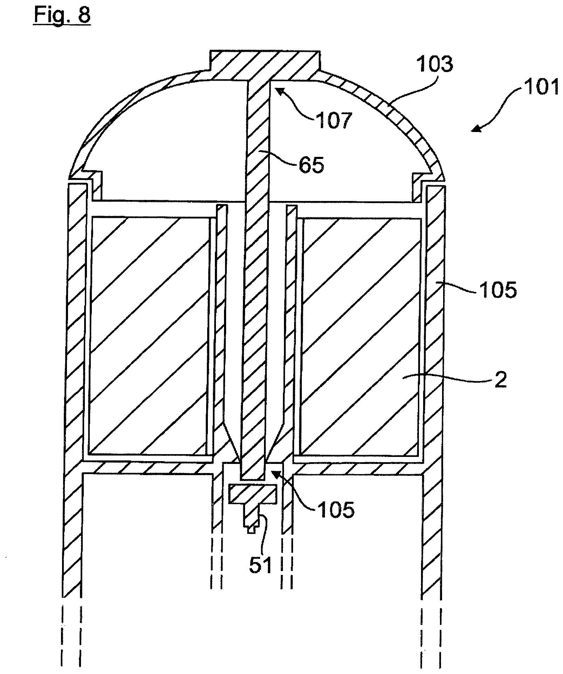

In Fig. 8 ist beispielhaft einer von zwei Filterbehältern 101 der Filtereinrichtung 1 gezeigt. In jedem Filterbehälter 101 ist dabei einer der Filter 2, 3 eingesetzt. Bei dem in Fig. 8 gezeigten Filterbehälter 101 ist hier beispielhaft der Filter 2 in den Filterbehälter 101 eingesetzt. Der Filterbehälter 101 weist einen Deckel 103 auf, der mittels einer Schraubverbindung als Fixiereinrichtung an einem Aufnahmebehälter 105 des Filterbehälters 101 lösbar festgelegt werden kann. An dem Deckel 103 ist das Stabelement 65 mit einem Endbereich 107, hier beispielhaft materialeinheitlich und einstückig, festgelegt. Bei dem in Fig. 8 gezeigten geschlossenen Zustand des Filterbehälters 101 ist das Stabelement 65 zudem mit seinem anderen Endbereich 109 derart in Anlage mit dem Kolben 51 (Fig. 5), dass das Kolbenelement 49 (Fig. 5) in seiner ersten Stellpositionen ist.

Zum Wechseln des Filters 2 wird die Schraubverbindung zwischen dem Deckel 103 und dem Aufnahmebehälter 105 gelöst. Dabei verlagert sich das Stabelement 65 derart, dass das Kolbenelement 49 (Fig. 5) in der bereits erläuterten Weise zunächst die zweite Stellposition und schließlich die dritte Stellposition einnimmt. Nach dem Lösen der Schraubverbindung zwischen dem Deckel 103 und dem Aufnahmebehälter 105 kann der Deckel 103 zusammen mit dem Stabelement 65 von dem Aufnahmebehälter 105 abgenommen und der Filter 2 ausgetauscht werden. Wird der Deckel 103 wieder mit dem Aufnahmebehälter 105 verschraubt, wird auch das Kolbenelement 49 (Fig. 5) wieder von der dritten in die erste Stellposition verlagert. Mittels der Filterbehälter 101 wird somit sichergestellt, dass die Filtereinrichtung 1 stets im Zweifilterbetrieb ist, wenn die beiden Filterbehälter 101 geschlossen sind. Sofern ein Filterbehälter 101 zum Wechseln eines der Filter 2, 3 geöffnet wird, wird die Filtereinrichtung 1 dann in den Einfilterbetrieb versetzt.

Des Weiteren ist die Schraubverbindung zwischen dem Deckel 103 und dem Aufnahmebehälter 105 vorzugsweise mittels eines Feingewindes ausgebildet, um eine kontrollierte und funktionssichere Verlagerung des Kolbenelements 49 beim Öffnen und Schließen des Filterbehälters 101 sicherzustellen.

### Bezugszeichenliste

- 1: Filtereinrichtung
- 2: Filter
- 3: Filter
- 4: Ölstrom
- 7: Zylinder-Kolben-Einheit
- 9: Zylinder-Kolben-Einheit
- 11: Zylinder
- 13: Eintritts-Ausnehmung
- 15: Hohlraum
- 17: Austritts-Ausnehmung
- 19: Zylinder
- 21: Eintritts-Ausnehmung
- 23: Hohlraum
- 25: Kolbenelement
- 27: Kolben
- 29: Kolben
- 31: Stange
- 33: Kolbenelement
- 35: Kolben
- 37: Kolben
- 39: Stange
- 41: Stelleinrichtung
- 43: Ventileinrichtung
- 45: Ventileinrichtung
- 47: Zylinder
- 49: Kolbenelement
- 51: Kolben
- 53: Kolben
- 55: Stange
- 56: Zylinderelement
- 57: Federelement
- 58: Ausnehmung
- 59: Federelement
- 61: hintere Wandung
- 63: vordere Wandung
- 65: Stabelement
- 67: freier Endbereich
- 69: Hohlraum
- 71: Verbindungsleitung
- 72: Bereich
- 73: Hohlraum
- 74: Verbindungsleitung
- 75: Bereich
- 77: Verbindungsleitung
- 78: hintere Wandung
- 79: Bereich
- 81: Verbindungsleitung
- 82: vordere Wandung
- 83: Bereich
- 84: hintere Wandung
- 85: Verbindungsleitung
- 87: Bereich
- 88: Verbindungsleitung
- 89: Ablassleitung
- 90: vordere Wandung
- 91: Ablassleitung
- 92: Bereich
- 93: Ablassleitung
- 95: Ablassleitung
- 97: Federelement
- 99: Anschlagelement
- 101: Filterbehälter
- 103: Deckel
- 105: Aufnahmebehälter
- 107: Endbereich
- 109: Endbereich
- x: Zylinder-Axialrichtung

## Patentansprüche

1. Verfahren zum Wechseln eines Filters, insbesondere eines Ölfilters für eine Brennkraftmaschine, mit einer wenigstens zwei Filter (2, 3) aufweisenden Filtereinrichtung (1), wobei jeder Filter (2, 3) von einem zu filternden Stoffstrom (4) durchströmbar ist, und mit einem mittels einer Stelleinrichtung (41) in mehrere Stellpositionen verlagerbaren Stellelement (25, 33), das in einer ersten Stellposition die Zuführung des Stoffstroms (4) zu einem ersten Filter (2) sperrt, während die Zuführung des Stoffstroms (4) zu einem zweiten Filter (3) freigegeben ist, und in einer zweiten Stellposition die Zuführung des Stoffstroms (4) zu dem zweiten Filter (3) sperrt, während die Zuführung des Stoffstroms (4) zu dem ersten Filter (2) freigegeben ist, wobei das Stellelement (25, 33) zum Wechseln des ersten Filters (2) in die erste Stellposition verlagert wird, und wobei das Stellelement zum Wechseln des zweiten Filters (3) in die zweite Stellposition verlagert wird, wobei das Stellelement (25, 33) derart ausgebildet und derart mittels der Stelleinrichtung (41) verlagerbar ist, dass bei der Verlagerung des Stellelements (25, 33) von der ersten in die zweite Stellposition und umgekehrt die Zuführung des Stoffstroms (4) zu wenigstens einem der Filter (2, 3) stets freigegeben ist und somit wenigstens einer der Filter (2, 3) stets von dem Stoffstrom (4) durchströmt wird, und wobei das Stellelement (25, 33) mittels der Stelleinrichtung (41) linear verlagerbar als Kolbenelement einer Zylinder-Kolben-Einheit (7, 9) ausgebildet ist, **dadurch gekennzeichnet, dass** das Kolbenelement (25, 33) hydraulisch oder pneumatisch mittels des zu filternden Stoffs angetrieben wird.

2. Verfahren nach Anspruch 1, **dadurch gekennzeichnet, dass** das verlagerbare Stellelement (25, 33) bei der Verlagerung von der ersten in die zweite Stellposition und umgekehrt in eine zwischen der ersten und zweiten Stellposition angeordnete dritten Stellposition verlagert wird, in der die Zuführung des Stoffstroms (4) zu dem ersten und zweiten Filter (2, 3) freigegeben ist, wobei bevorzugt vorgesehen ist, dass in der dritten Stellposition der erste und zweite Filter (2, 3) parallel vom Stoffstrom (4) durchströmt werden.

3. Verfahren nach Anspruch 1 oder 2, **dadurch gekennzeichnet, dass** die Verlagerung des Stellelements (25, 33) mittels wenigstens eines Anschlagelements (78, 82, 84, 90, 97) derart begrenzt wird, dass das Stellelement (25, 33) nur zwischen der ersten und zweiten Stellposition verlagerbar ist, und/oder dass das Stellelement (25, 33) mittels der Stelleinrichtung (41) linear verlagert wird, wobei bevorzugt vorgesehen ist, dass das Stellelement (25, 33) als Kolbenelement einer Zylinder-Kolben-Einheit (7, 9) ausgebildet ist.

4. Verfahren nach einem der vorhergehenden Ansprüche, **dadurch gekennzeichnet, dass** die Stelleinrichtung (41) mittels wenigstens einer, insbesondere manuell betätigbaren, Betätigungseinrichtung (65) betätigt wird, wobei bevorzugt vorgesehen ist, dass bei einer Betätigung der Betätigungseinrichtung (65) zum Wechseln eines der Filter (2, 3) zunächst die Zuführung des Stoffstroms (4) zu dem Filter (2, 3) gesperrt und anschließend eine Ablass-Einrichtung (93, 95) aktiviert wird, mittels der der Reststoff in dem Filter (2, 3) aus dem Filter (2, 3) abgelassen wird.

5. Verfahren nach Anspruch 4, **dadurch gekennzeichnet, dass** der erste Filter (2) in einem ersten Filterbehälter (101) und der zweite Filter (3) in einem zweiten Filterbehälter (101) angeordnet ist, dass jeder der Filterbehälter (101) einen Deckel (103) aufweist, mittels dem die Filterbehälter (101) zum Wechseln der Filter (2) verschließbar und öffenbar sind, und dass der Deckel (103) mittels einer, insbesondere manuell betätigbaren, Fixiereinrichtung lösbar an dem Filterbehälter (101) festlegbar ist, wobei die Fixiereinrichtungen der Filterbehälter (101) derart mit der wenigstens einen Betätigungseinrichtung (65) gekoppelt sind, dass bei einem Lösen des Deckels (103) des ersten Filterbehälters (101) die Betätigungseinrichtung (65) zum Wechseln des ersten Filters (2) betätigt wird, und dass bei einem Lösen des Deckels (103) des zweiten Filterbehälters (101) die Betätigungseinrichtung (65) zum Wechseln des zweiten Filters (3) betätigt wird.

6. Vorrichtung zum Wechseln wenigstens eines Filters, insbesondere wenigstens eines Ölfilters für eine Brennkraftmaschine und/oder zur Durchführung eines Verfahrens nach einem der vorhergehenden Ansprüche, mit einer wenigstens zwei Filter (2, 3) aufweisenden Filtereinrichtung (1), wobei jeder Filter (2, 3) von einem zu filternden Stoffstrom (4) durchströmbar ist, und mit einem mittels einer Stelleinrichtung (41) in mehrere Stellpositionen verlagerbaren Stellelement (25, 33), das in einer ersten Stellposition die Zuführung des Stoffstroms (4) zu einem ersten Filter (2) sperrt, während die Zuführung des Stoffstroms (4) zu einem zweiten Filter (3) freigegeben ist, und in einer zweiten Stellposition die Zuführung des Stoffstroms (4) zu dem zweiten Filter (3) sperrt, während die Zuführung des Stoffstroms zu dem ersten Filter (2) freigegeben ist, wobei das Stellelement (25, 33) derart ausgebildet und derart mittels der Stelleinrichtung (41) verlagerbar ist, dass bei der Verlagerung des Stellelements (25, 33) von der ersten in die zweite Stellposition und umgekehrt die Zuführung des Stoffstroms (4) zu wenigstens einem der Filter (2, 3) stets freigegeben ist, und wobei das Stellelement (25, 33) mittels der Stelleinrichtung (41) linear verlagerbar als Kolbenelement einer Zylinder-Kolben-Einheit (7, 9) ausgebildet ist, **dadurch gekennzeichnet, dass** das Kolbenelement (25, 33) hydraulisch oder pneumatisch mittels des zu filternden Stoffs antreibbar ist.

7. Vorrichtung nach Anspruch 6, **dadurch gekennzeichnet, dass** das verlagerbare Stellelement (25, 33) bei der Verlagerung von der ersten in die zweite Stellposition und umgekehrt in eine zwischen der ersten und zweiten Stellposition angeordnete dritten Stellposition verlagerbar ist, in der die Zuführung des Stoffstroms (4) zu dem ersten und zweiten Filter (2, 3) freigegeben ist, wobei bevorzugt vorgesehen ist, dass das Stellelement (25, 33) derart ausgebildet ist, dass in der dritten Stellposition der erste und zweite Filter (2, 3) parallel vom Stoffstrom (4) durchströmbar sind.

8. Vorrichtung nach Anspruch 6 oder 7, **dadurch gekennzeichnet, dass** die Verlagerung des Stellelements (25, 33) mittels wenigstens eines Anschlagelements (78, 82, 84, 90, 97) derart begrenzt ist, dass das Stellelement (25, 33) nur zwischen der ersten und zweiten Stellposition verlagerbar ist.

9. Vorrichtung nach Anspruch 8, **dadurch gekennzeichnet, dass** zwei Zylinder-Kolben-Einheiten (7, 9) vorgesehen sind, deren Kolbenelemente (25, 33) das Stellelement ausbilden und derart miteinander gekoppelt sind, dass sie stets eine im Wesentlichen identische und/oder synchrone Hubbewegung ausführen, wobei eine erste der beiden Zylinder-Kolben-Einheiten (7), in Stoff-Strömungsrichtung gesehen, stromauf der parallel vom Stoffstrom (4) durchströmbaren Filter (2, 3) angeordnet ist, und wobei eine zweite der beiden Zylinder-Kolben-Einheiten (9), in Stoff-Strömungsrichtung gesehen, stromab der parallel vom Stoffstrom (4) durchströmten Filter (2, 3) angeordnet ist.

10. Vorrichtung nach Anspruch 9, **dadurch gekennzeichnet, dass** der Zylinder (11) der ersten Zylinder-Kolben-Einheit (7) eine umfangsseitig angeordnete Eintritts-Ausnehmung (13) und zwei umfangsseitig angeordnete Austritts-Ausnehmungen (17) aufweist, wobei die beiden Austritts-Ausnehmungen (17) in Zylinder-Axialrichtung (x) voneinander beabstandet sind, und wobei der zu filternde Stoffstrom (4) über die Eintritts-Ausnehmung (13) in einen Hohlraum (15) des Zylinders (11) eintritt und über die beiden Austritts-Ausnehmungen (17) aus dem Hohlraum (15) austritt, dass der Hohlraum (15) des Zylinders (11) über eine erste der beiden Austritts-Ausnehmungen (17) strömungstechnisch mit dem ersten Filter (2) verbunden ist, dass der Hohlraum (15) des Zylinders (11) über eine zweite der beiden Austritts-Ausnehmungen (17) strömungstechnisch mit dem zweiten Filter (3) verbunden ist, und dass die beiden Austritts-Ausnehmungen (17) mittels des Kolbenelements (25) der ersten Zylinder-Kolben-Einheit (7) strömungstechnisch verschließbar und öffenbar sind.

11. Vorrichtung nach Anspruch 10, **dadurch gekennzeichnet, dass** ein Zylinder (19) der zweiten Zylinder-Kolben-Einheit (9) zwei umfangsseitig angeordnete Eintritts-Ausnehmungen (21) und eine umfangsseitig angeordnete Austritts-Ausnehmung (24) aufweist, wobei die beiden Eintritts-Ausnehmungen (21) in Zylinder-Axialrichtung (x) voneinander beabstandet sind, und wobei der zu filternde Stoffstrom (4) über die beiden Eintritts-Ausnehmungen (21) in einen Hohlraum (23) des Zylinders (19) eintritt und über die Austritts-Ausnehmung (24) aus dem Hohlraum (23) austritt, und dass die beiden Eintritts-Ausnehmungen (21) derart angeordnet sind, dass der Hohlraum (23) des Zylinders (19) zumindest in der ersten Stellposition des Kolbenelements (33) der zweiten Zylinder-Kolben-Einheit (9) über eine erste der beiden Eintritts-Ausnehmungen (21) strömungstechnisch mit dem ersten Filter (2) verbunden ist, und dass der Hohlraum (23) des zweiten Zylinders (19) zumindest in der zweiten Stellposition des Kolbenelements (33) über eine zweite der beiden Eintritts-Ausnehmungen (21) strömungstechnisch mit dem zweiten Filter (3) verbunden ist.

12. Vorrichtung nach einem der Ansprüche 8 bis 11, **dadurch gekennzeichnet, dass** wenigstens ein Kolbenelement (25, 33) zwei in Zylinder-Axialrichtung (x) voneinander beabstandete Kolben (27, 29, 35, 37) aufweist, die mittels eines Verbindungselements (31, 39), insbesondere einer Stange, starr miteinander verbunden sind, und/oder dass die Stelleinrichtung (41) als Ventileinrichtung ausgebildet ist.

13. Vorrichtung nach einem der Ansprüche 6 bis 12, **dadurch gekennzeichnet, dass** die Stelleinrichtung (41) mittels wenigstens einer, insbesondere manuell betätigbaren, Betätigungseinrichtung (65) betätigbar ist, wobei bevorzugt vorgesehen ist, dass bei einer Betätigung der Betätigungseinrichtung (65) zum Wechseln eines der Filter (2, 3) zunächst die Zuführung des Stoffstroms (4) zu dem Filter (2, 3) sperrbar und anschließend eine Ablass-Einrichtung (93, 95) aktivierbar ist, mittels der der Reststoff in dem Filter (2, 3) aus dem Filter (2, 3) ablassbar und/oder ausleitbar ist.

14. Vorrichtung nach Anspruch 13, **dadurch gekennzeichnet, dass** der erste Filter (2) in einem ersten Filterbehälter (101) und der zweite Filter (3) in einem zweiten Filterbehälter (101) angeordnet ist, dass jeder der Filterbehälter (101) einen Deckel (103) aufweist, mittels dem die Filterbehälter (101) zum Wechseln der Filter (2, 3) verschließbar und öffenbar sind, und dass der Deckel (103) mittels einer, insbesondere manuell betätigbaren, Fixiereinrichtung lösbar an dem Filterbehälter (101) festlegbar ist, wobei die Fixiereinrichtungen der Filterbehälter (101) derart mit der wenigstens einen Betätigungseinrichtung (65) gekoppelt sind, dass bei einem Lösen des Deckels (103) des ersten Filterbehälters (101) die Betätigungseinrichtung (65) zum Wechseln des ersten Filters (2) betätigbar ist, und dass bei einem Lösen des Deckels (103) des zweiten Filterbehälters (101) die Betätigungseinrichtung (65) zum Wechseln des zweiten Filters (3) betätigbar ist.

15. Fahrzeug, insbesondere Wasserfahrzeug, mit einer Vorrichtung nach einem der Ansprüche 6 bis 14.

## Claims

1. Method for changing a filter, in particular an oil filter for an internal combustion engine, comprising a filter device (1) having at least two filters (2, 3), it being possible for a material stream (4) to be filtered to flow through each filter (2, 3), and comprising an adjusting element (25, 33) which can be displaced into multiple adjusting positions by means of an adjusting device (41) and which, in a first adjusting position, blocks the supply of the material stream (4) to a first filter (2), while the supply of the material stream (4) to the second filter (3) is open, and, in a second position, blocks the supply of the material stream (4) to the second filter (3), while the supply of the material stream (4) to the first filter (2) is open, the adjusting element (25, 33) being displaced into the first adjusting position to change the first filter (2), and the adjusting element being displaced into the second adjusting position to change the second filter (3), the adjusting element (25, 33) being formed in such a way and displaceable by means of the adjusting device (41) in such a way that, when the adjusting element (25, 33) is displaced from the first to the second adjusting position and vice versa, the supply of the material stream (4) to at least one of the filters (2, 3) is always open and thus the material stream (4) always flows through at least one of the filters (2, 3), and the adjusting element (25, 33) is designed to be linearly displaceable by means of the adjusting device (41) as a piston element of a cylinder-piston unit (7, 9), **characterized in that** the piston element (25, 33) is driven hydraulically or pneumatically by means of the material to be filtered.

2. Method according to Claim 1, **characterized in that** during the displacement from the first to the second adjusting position and vice versa, the displaceable adjusting element (25, 33) is displaced into a third adjusting position, arranged between the first and second adjusting positions, in which the supply of the material stream (4) to the first and second filter (2, 3) is open, wherein provision is preferably made that, in the third adjusting position, the material stream (4) flows through the first and second filter (2, 3) in parallel.

3. Method according to Claim 1 or 2, **characterized in that** the displacement of the adjusting element (25, 33) is limited by means of at least one stop element (78, 82, 84, 90, 97) in such a way that the adjusting element (25, 33) can be displaced only between the first and second adjusting position, and/or that the adjusting element (25, 33) is displaced linearly by means of the adjusting device (41), wherein provision is preferably made that the adjusting element (25, 33) is formed as a piston element of a cylinder-piston unit (7, 9).

4. Method according to one of the preceding claims, **characterized in that** the adjusting device (41) is actuated by means of at least one actuating device (65), in particular one which can be actuated manually, wherein provision is preferably made that, in the event of an actuation of the actuating device (65) to change one of the filters (2, 3), firstly the supply of the material stream (4) to the filter (2, 3) is blocked and then a discharge device (93, 95) is activated, by means of which the remaining material in the filter (2, 3) is let out of the filter (2, 3).

5. Method according to Claim 4, **characterized in that** the first filter (2) is arranged in a first filter container (101) and the second filter (3) is arranged in a second filter container (101), **in that** each of the filter containers (101) has a cover (103), by means of which the filter containers (101) can be closed and opened to change the filters (2), and **in that** the cover (103) can be fixed detachably to the filter container (101) by means of a fixing device, in particular one that can be actuated manually, wherein the fixing devices of the filter containers (101) are coupled to the at least one actuating device (65) in such a way that when the cover (103) of the first filter container (101) is detached, the actuating device (65) for changing the first filter (2) is actuated, and when the cover (103) of the second filter container (101) is detached, the actuating device (65) for changing the second filter (3) is actuated.

6. Device for changing at least one filter, in particular at least one oil filter for an internal combustion engine and/or for carrying out a method according to one of the preceding claims, comprising a filter device (1) having at least two filters (2, 3), it being possible for a material stream (4) to be filtered to flow through each filter (2, 3), and comprising an adjusting element (25, 33) which can be displaced into multiple adjusting positions by means of an adjusting device (41) and which, in a first adjusting position, blocks the supply of the material stream (4) to a first filter (2), while the supply of the material stream (4) to a second filter (3) is open, and, in a second adjusting position, blocks the supply of the material stream (4) to the second filter (3), while the supply of the material stream to the first filter (2) is open, the adjusting element (25, 33) being formed in such a way and displaceable by means of the adjusting device (41) in such a way that, when the adjusting element (25, 33) is displaced from the first to the second adjusting position and vice versa, the supply of the material stream (4) to at least one of the filters (2, 3) is always open, and the adjusting element (25, 33) is designed to be linearly displaceable by means of the adjusting device (41) as a piston element of a cylinder-piston unit (7, 9), **characterized in that** the piston element (25, 33) is driven hydraulically or pneumatically by means of the material to be filtered.

7. Device according to Claim 6, **characterized in that** during the displacement from the first to the second adjusting position and vice versa, the displaceable adjusting element (25, 33) can be displaced into a third adjusting position, arranged between the first and second adjusting positions, in which the supply of the material stream (4) to the first and second filter (2, 3) is open, wherein provision is preferably made that the adjusting element (25, 33) is formed in such a way that, in the third adjusting position, the material stream (4) flows through the first and second filter (2, 3) in parallel.

8. Device according to Claim 6 or 7, **characterized in that** the displacement of the adjusting element (25, 33) is limited by means of at least one stop element (78, 82, 84, 90, 97) in such a way that the adjusting element (25, 33) can be displaced only between the first and second adjusting position.

9. Device according to Claim 8, **characterized in that** two cylinder-piston units (7, 9) are provided, of which the piston elements (25, 33) form the adjusting element and are coupled to each other in such a way that they always execute a substantially identical and/or synchronous reciprocating movement, wherein a first of the two cylinder-piston units (7), seen in the material flow direction, is arranged upstream of the filters (2, 3) through which the material stream (4) can flow in parallel, and wherein a second of the two cylinder-piston units (9), seen in the material stream direction, is arranged downstream of the filters (2, 3) through which the material stream (4) flows in parallel.

10. Device according to Claim 9, **characterized in that** the cylinder (11) of the first cylinder-piston unit (7) has a circumferentially arranged inlet recess (13) and two circumferentially arranged outlet recesses (17), wherein the two outlet recesses (17) are arranged at a distance from each other in the cylinder axial direction (x), and wherein the material stream (4) to be filtered enters a hollow space (15) of the cylinder (11) via the inlet recess (13) and leaves the hollow space (15) via the two outlet recesses (17), **in that** the hollow space (15) of the cylinder (11) is fluidically connected to the first filter (2) via a first of the two outlet recesses (17), **in that** the hollow space (15) of the cylinder (11) is fluidically connected to the second filter (3) via a second of the two outlet recesses (17), and **in that** the two outlet recesses (17) can be closed and opened fluidically by means of the piston element (25) of the first cylinder-piston unit (7).

11. Device according to Claim 10, **characterized in that** a cylinder (19) of the second cylinder-piston unit (9) has two circumferentially arranged inlet recesses (21) and a circumferentially arranged outlet recess (24), wherein the two inlet recesses (21) are arranged at a distance from each other in the cylinder axial direction (x), and wherein the material stream (4) to be filtered enters a hollow space (23) of the cylinder (19) via the two inlet recesses (21) and leaves the hollow space (23) via the outlet recess (24), and **in that** the two inlet recesses are arranged in such a way, that the hollow space (23) of the cylinder (19), at least in the first adjusting position of the piston element (33) of the second cylinder-piston unit (9), is fluidically connected to the first filter (2) via a first of the two inlet recesses (21), and **in that** the hollow space (23) of the second cylinder (19), at least in the second adjusting position of the piston element (33), is fluidically connected to the second filter (3) via a second of the two inlet recesses (21).

12. Device according to one of Claims 8 to 11, **characterized in that** at least one piston element (25, 33) has two pistons (27, 29, 35, 37) arranged at a distance from each other in the cylinder axial direction (x), which are rigidly connected to each other by means of a connecting element (31, 39), in particular a rod, and/or **in that** the adjusting device (41) is designed as a valve device.

13. Device according to one of Claims 6 to 12, **characterized in that** the adjusting device (41) can be actuated by means of at least one actuating device (65), in particular one that can be actuated manually, wherein provision is preferably made that in the event of an actuation of the actuating device (65) to change one of the filters (2, 3), firstly the supply of the material stream (4) to the filter (2, 3) can be blocked and then a discharge device (93, 95) can be activated, by means of which the remaining material in the filter (2, 3) is let out of the filter (2, 3).

14. Device according to Claim 13, **characterized in that** the first filter (2) is arranged in a first filter container (101) and the second filter (3) is arranged in a second filter container (101), **in that** each of the filter containers (101) has a cover (103), by means of which the filter container (101) can be closed and opened to change the filters (2), and **in that** the cover (103) can be fixed detachably to the filter container (101) by means of a fixing device, in particular one that can be actuated manually, wherein the fixing devices of the filter containers (101) are coupled to the at least one actuating device (65) in such a way that when the cover (103) of the first filter container (101) is detached, the actuating device (65) for changing the first filter (2) is actuated, and when the cover (103) of the second filter container (101) is detached, the actuating device (65) for changing the second filter (3) is actuated.

15. Vehicle, in particular watercraft, having a device according to one of Claims 6 to 14.

## Revendications

1. Procédé de changement d'un filtre, en particulier d'un filtre à huile pour un moteur à combustion interne, comportant un dispositif filtrant (1) comprenant au moins deux filtres (2, 3), chaque filtre (2, 3) pouvant être traversé par un flux de substance (4) à filtrer, et un élément de réglage (25, 33) pouvant être déplacé dans plusieurs positions de réglage au moyen d'un dispositif de réglage (41), lequel élément de réglage bloque, dans une première position de réglage, l'acheminement du flux de substance (4) jusqu'à un premier filtre (2), tandis que l'acheminement du flux de substance (4) jusqu'à un deuxième filtre (3) est autorisé et, dans une deuxième position de réglage, bloque l'acheminement du flux de substance (4) jusqu'au deuxième filtre (3), tandis que l'acheminement du flux de substance (4) jusqu'au premier filtre (2) est autorisé, l'élément de réglage (25, 33) étant déplacé dans la première position de réglage pour le changement du premier filtre (2), et l'élément de réglage étant déplacé dans la deuxième position de réglage pour le changement du deuxième filtre (3), l'élément de réglage (25, 33) étant réalisé et déplaçable au moyen du dispositif de réglage (41) de telle sorte que, lors du déplacement de l'élément de réglage (25, 33) de la première à la deuxième position de réglage et inversement, l'acheminement du flux de substance (4) jusqu'à au moins l'un des filtres (2, 3) est constamment autorisé et par conséquent au moins l'un des filtres (2, 3) est constamment traversé par le flux de substance (4), et l'élément de réglage (25, 33) étant déplaçable linéairement au moyen du dispositif de réglage (41) en tant qu'élément piston d'une unité cylindre-piston (7, 9), **caractérisé en ce que** l'élément piston (25, 33) est entraîné de manière hydraulique ou pneumatique au moyen de la substance à filtrer.

2. Procédé selon la revendication 1, **caractérisé en ce que** l'élément de réglage déplaçable (25, 33) est, lors du déplacement de la première à la deuxième position de réglage et inversement, déplacé dans une troisième position de réglage disposée entre la première et la deuxième position de réglage, troisième position de réglage dans laquelle l'acheminement du flux de substance (4) jusqu'au premier et au deuxième filtre (2, 3) est autorisé, le premier et le deuxième filtre (2, 3) étant de préférence traversés parallèlement par le flux de substance (4) dans la troisième position de réglage.

3. Procédé selon la revendication 1 ou 2, **caractérisé en ce que** le déplacement de l'élément de réglage (25, 33) est limité au moyen d'au moins un élément de butée (78, 82, 84, 90, 97) de telle sorte que l'élément de réglage (25, 33) ne soit déplaçable qu'entre la première et la deuxième position de réglage, et/ou **en ce que** l'élément de réglage (25, 33) est déplacé linéairement au moyen du dispositif de réglage (41), l'élément de réglage (25, 33) étant de préférence réalisé en tant qu'élément piston d'une unité cylindre-piston (7, 9).

4. Procédé selon l'une des revendications précédentes, **caractérisé en ce que** le dispositif de réglage (41) est actionné au moyen d'au moins un dispositif d'actionnement (65) pouvant être actionné en particulier manuellement, et de préférence, lors d'un actionnement du dispositif d'actionnement (65) pour le changement de l'un des filtres (2, 3), tout d'abord l'acheminement du flux de substance (4) jusqu'au filtre (2, 3) étant bloqué et ensuite un dispositif d'évacuation (93, 95) étant activé, au moyen duquel le résidu dans le filtre (2, 3) est évacué hors du filtre (2, 3).

5. Procédé selon la revendication 4, **caractérisé en ce que** le premier filtre (2) est disposé dans un premier contenant de filtre (101) et le deuxième filtre (3) est disposé dans un deuxième contenant de filtre (101), **en ce que** chacun des contenants de filtre (101) comprend un couvercle (103) au moyen duquel les contenants de filtre (101) peuvent être fermés et ouverts pour le changement des filtres (2), et **en ce que** le couvercle (103) peut être fixé de manière amovible au contenant de filtre (101) au moyen d'un dispositif de fixation pouvant être actionné en particulier manuellement, les dispositifs de fixation des contenants de filtre (101) étant accouplés audit au moins un dispositif d'actionnement (65) de telle sorte que, lors d'un détachement du couvercle (103) du premier contenant de filtre (101), le dispositif d'actionnement (65) est actionné pour le changement du premier filtre (2), et que, lors d'un détachement du couvercle (103) du deuxième contenant de filtre (101), le dispositif d'actionnement (65) est actionné pour le changement du deuxième filtre (3).

6. Dispositif de changement d'au moins un filtre, en particulier d'au moins un filtre à huile pour un moteur à combustion interne et/ou de mise en oeuvre d'un procédé selon l'une des revendications précédentes, comportant un dispositif filtrant (1) comprenant au moins deux filtres (2, 3), chaque filtre (2, 3) pouvant être traversé par un flux de substance (4) à filtrer, et un élément de réglage (25, 33) pouvant être déplacé dans plusieurs positions de réglage au moyen d'un dispositif de réglage (41), lequel élément de réglage bloque, dans une première position de réglage, l'acheminement du flux de substance (4) jusqu'à un premier filtre (2), tandis que l'acheminement du flux de substance (4) jusqu'à un deuxième filtre (3) est autorisé et, dans une deuxième position de réglage, bloque l'acheminement du flux de substance (4) jusqu'au deuxième filtre (3), tandis que l'acheminement du flux de substance jusqu'au premier filtre (2) est autorisé, l'élément de réglage (25, 33) étant réalisé et déplaçable au moyen du dispositif de réglage (41) de telle sorte que, lors du déplacement de l'élément de réglage (25, 33) de la première à la deuxième position de réglage et inversement, l'acheminement du flux de substance (4) jusqu'à au moins l'un des filtres (2, 3) est constamment autorisé, et l'élément de réglage (25, 33) étant déplaçable linéairement au moyen du dispositif de réglage (41) en tant qu'élément piston d'une unité cylindre-piston (7, 9), **caractérisé en ce que** l'élément piston (25, 33) peut être entraîné de manière hydraulique ou pneumatique au moyen de la substance à filtrer.

7. Dispositif selon la revendication 6, **caractérisé en ce que** l'élément de réglage déplaçable (25, 33) est, lors du déplacement de la première à la deuxième position de réglage et inversement, déplaçable dans une troisième position de réglage disposée entre la première et la deuxième position de réglage, troisième position de réglage dans laquelle l'acheminement du flux de substance (4) jusqu'au premier et au deuxième filtre (2, 3) est autorisé, l'élément de réglage (25, 33) étant de préférence réalisé de telle sorte que, dans la troisième position de réglage, le premier et le deuxième filtre (2, 3) peuvent être traversés parallèlement par le flux de substance (4).

8. Dispositif selon la revendication 6 ou 7, **caractérisé en ce que** le déplacement de l'élément de réglage (25, 33) est limité au moyen d'au moins un élément de butée (78, 82, 84, 90, 97) de telle sorte que l'élément de réglage (25, 33) ne soit déplaçable qu'entre la première et la deuxième position de réglage.

9. Dispositif selon la revendication 8, **caractérisé en ce que** deux unités cylindre-piston (7, 9) sont prévues, unités dont les éléments pistons (25, 33) forment l'élément de réglage et sont accouplés l'un à l'autre de telle sorte qu'ils effectuent constamment un mouvement de va-et-vient sensiblement identique et/ou synchrone, une première des deux unités cylindre-piston (7) étant, vue dans le sens d'écoulement de la substance, disposée en amont des filtres (2, 3) pouvant être traversés parallèlement par le flux de substance (4), et une deuxième des deux unités cylindre-piston (9) étant, vue dans le sens d'écoulement de la substance, disposée en aval des filtres (2, 3) pouvant être traversés parallèlement par le flux de substance (4).

10. Dispositif selon la revendication 9, **caractérisé en ce que** le cylindre (11) de la première unité cylindre-piston (7) comprend un évidement d'entrée (13) disposé du côté périphérique et deux évidements de sortie (17) disposés du côté périphérique, les deux évidements de sortie (17) étant espacés l'un de l'autre dans la direction axiale de cylindre (x), et le flux de substance (4) à filtrer entrant, par le biais de l'évidement d'entrée (13), dans une cavité (15) du cylindre (11) et sortant, par le biais des deux évidements de sortie (17), hors de la cavité (15), **en ce que** la cavité (15) du cylindre (11) est reliée fluidiquement au premier filtre (2) par le biais d'un premier des deux évidements de sortie (17), **en ce que** la cavité (15) du cylindre (11) est reliée fluidiquement au deuxième filtre (3) par le biais d'un deuxième des deux évidements de sortie (17), et **en ce que** les deux évidements de sortie (17) peuvent être fermés et ouverts de manière fluidique au moyen de l'élément piston (25) de la première unité cylindre-piston (7).

11. Dispositif selon la revendication 10, **caractérisé en ce qu'**un cylindre (19) de la deuxième unité cylindre-piston (9) comprend deux évidements d'entrée (21) disposés du côté périphérique et un évidement de sortie (24) disposé du côté périphérique, les deux évidements d'entrée (21) étant espacés l'un de l'autre dans la direction axiale de cylindre (x), et le flux de substance (4) à filtrer entrant, par le biais des deux évidements d'entrée (21), dans une cavité (23) du cylindre (19) et sortant, par le biais de l'évidement de sortie (24), hors de la cavité (23), et **en ce que** les deux évidements d'entrée (21) sont disposés de telle sorte que la cavité (23) du cylindre (19) est reliée fluidiquement au premier filtre (2) par le biais d'un premier des deux évidements d'entrée (21) au moins dans la position de réglage de l'élément piston (33) de la deuxième unité cylindre-piston (9), et que la cavité (23) du deuxième cylindre (19) est reliée fluidiquement au deuxième filtre (3) par le biais d'un deuxième des deux évidements d'entrée (21) au moins dans la deuxième position de réglage de l'élément piston (33).

12. Dispositif selon l'une des revendications 8 à 11, **caractérisé en ce qu'**au moins un élément piston (25, 33) comprend deux pistons (27, 29, 35, 37) espacés l'un de l'autre dans la direction axiale de cylindre (x), lesquels pistons sont reliés rigidement l'un à l'autre au moyen d'un élément de liaison (31, 39), en particulier d'une tige, et/ou **en ce que** le dispositif de réglage (41) est réalisé sous forme de dispositif soupape.

13. Dispositif selon l'une des revendications 6 à 12, **caractérisé en ce que** le dispositif de réglage (41) peut être actionné au moyen d'au moins un dispositif d'actionnement (65) pouvant être actionné en particulier manuellement, et de préférence, lors d'un actionnement du dispositif d'actionnement (65) pour le changement de l'un des filtres (2, 3), tout d'abord l'acheminement du flux de substance (4) jusqu'au filtre (2, 3) pouvant être bloqué et ensuite un dispositif d'évacuation (93, 95) pouvant être activé, au moyen duquel le résidu dans le filtre (2, 3) peut être évacué hors du filtre (2, 3) et/ou peut être guidé hors de celui-ci.

14. Dispositif selon la revendication 13, **caractérisé en ce que** le premier filtre (2) est disposé dans un premier contenant de filtre (101) et le deuxième filtre (3) est disposé dans un deuxième contenant de filtre (101), **en ce que** chacun des contenants de filtre (101) comprend un couvercle (103) au moyen duquel les contenants de filtre (101) peuvent être fermés et ouverts pour le changement des filtres (2, 3), et **en ce que** le couvercle (103) peut être fixé de manière amovible au contenant de filtre (101) au moyen d'un dispositif de fixation pouvant être actionné en particulier manuellement, les dispositifs de fixation des contenants de filtre (101) étant accouplés audit au moins un dispositif d'actionnement (65) de telle sorte que, lors d'un détachement du couvercle (103) du premier contenant de filtre (101), le dispositif d'actionnement (65) peut être actionné pour le changement du premier filtre (2), et que, lors d'un détachement du couvercle (103) du deuxième contenant de filtre (101), le dispositif d'actionnement (65) peut être actionné pour le changement du deuxième filtre (3).

15. Véhicule, en particulier véhicule aquatique, comprenant un dispositif selon l'une des revendications 6 à 14.
